# EUROPÄISCHE PATENTSCHRIFT

(11) **EP 2 601 330 B1**
(45) Veröffentlichungstag und Bekanntmachung des Hinweises auf die Patenterteilung: **04.10.2017**
(21) Anmeldenummer: 11746208.5
(22) Anmeldetag: 01.08.2011
(51) Int. Cl.: C23C 28/00, C23C 30/00

(54) **SCHNEIDWERKZEUG MIT MEHRLAGIGER BESCHICHTUNG**
CUTTING TOOL COMPRISING MULTILAYER COATING
OUTIL DE COUPE POURVU D'UN REVÊTEMENT MULTICOUCHE

(30) Priorität: 06.08.2010 DE 102010039035
(43) Veröffentlichungstag der Anmeldung: 12.06.2013
(73) Patentinhaber: Walter AG, 72072 Tübingen (DE)
(72) Erfinder: SCHIER, Veit, 70771 Leinfelden-Echterdingen (DE)
(74) Vertreter: WSL Patentanwälte Partnerschaft mbB
(86) Internationale Anmeldenummer: PCT/EP2011/063234
(87) Internationale Veröffentlichungsnummer: WO 2012/016954

(56) Entgegenhaltungen:
- EP-A1- 0 653 499
- WO-A2-2005/120786
- AGUZZOLI C ET AL: "Physicochemical, structural, and mechanical properties of Si3 N4 films annealed in O2", JOURNAL OF APPLIED PHYSICS, Bd. 107, Nr. 7, 1. April 2010 (2010-04-01) , XP002660443, AMERICAN INSTITUTE OF PHYSICS, USA DOI: 10.1063/1.3359655

## Beschreibung

Die Erfindung betrifft ein Schneidwerkzeug mit einem Grundkörper und einer darauf aufgebrachten mehrlagigen Beschichtung.

### Stand der Technik

Schneidwerkzeuge umfassen einen Grundkörper, der beispielsweise aus Hartmetall, Cermet, Stahl oder Schnellarbeitsstahl hergestellt ist, und zur Erhöhung der Standzeiten oder auch zur Verbesserung der Schneideigenschaften eine auf den Grundkörper aufgebrachte ein- oder mehrlagige Hartstoffbeschichtung. Zum Aufbringen der Hartstoffbeschichtung werden CVD-Verfahren (chemische Gasphasenabscheidung; chemical vapour deposition) und/oder PVD-Verfahren (physikalische Gasphasenabscheidung; physical vapour deposition) angewendet.

Die WO 96/23911 beschreibt ein Schneidwerkzeug mit einer mehrlagigen Verschleißschutzbeschichtung aus einer Vielzahl von Einzellagen, wobei unmittelbar auf dem Grundkörper eine Einzellage aus einem metallischen Hartstoff aufgebracht ist und darüber weitere Einzellagen angeordnet sind, so dass die Einzellagen einen sich periodisch wiederholenden Verbund aus jeweils drei verschiedenen Einzellagen bilden, der jeweils zwei verschiedene metallische Hartstofflagen und eine kovalente Hartstofflage umfasst. In einer als bevorzugt beschriebenen Ausführungsform besteht der dreilagige Verbund aus zwei Einzellagen aus Titannitrid und Titancarbid und einer Einzellage aus dem kovalenten Hartstoff Borcarbid. Beschrieben ist, dass die Verschleißschutzbeschichtung mindestens 3 kovalente Hartstoffschichten umfassen soll und somit aus mindestens 9 Einzellagen besteht. Vorzugsweise ist die auf dem Grundkörper aufliegende erste Einzellage eine Lage aus Titannitrid oder Titancarbid, da diese gut auf dem Grundkörper aus Stahl oder Hartmetall haften sollen. Für die Einzellagen aus kovalentem Hartstoff werden neben dem besonders bevorzugten Borcarbid auch Siliziumcarbid, Siliziumnitrid, Bornitrid, Sialon (Mischkristall aus Silizium- und Aluminiumoxynitrid), Kohlenstoff und weitere angegeben. Es hat sich jedoch gezeigt, dass die beschriebenen Einzellagen aus den metallischen Hartstoffen Titannitrid und Titancarbid den heutigen Anforderungen an den Verschleißschutz nicht gerecht werden. Titancarbid ist zwar hart, aber zu spröde für eine Verschleißschutzschicht. Titannitrid ist weicher und weniger spröde als Titancarbid. Sowohl Titancarbid als auch Titannitrid besitzen für Anwendungen mit hohen Temperaturbelastungen ungenügende Temperaturbeständigkeit. Auch die Wärmeableitung in die Späne bei der Metallbearbeitung ist ungenügend.

Die WO 2005/120786 offenbart einen Gewindeschneider aus einem mit Molybdän angereicherten Schnellarbeitsstahl, welcher mit einer ein- oder mehrlagigen, verschleißbeständigen Beschichtung mit niedrigem Reibungswiderstand aus Nitriden, Carbiden, Carbonitriden, Boriden und/oder Oxiden der Metalle Aluminium, Silizium und/oder der Übergangsmetalle der Gruppen IVa, Va und VIa des Periodensystems überzogen ist. Die äußerste Lage der Beschichtung ist bevorzugt eine Lage aus Molybdändisulfid, gegebenenfalls mit weiteren metallischen Additiven. Alternativ ist die äußerste Lage der Beschichtung eine Kohlenstoffschicht oder abwechselnde Lagen aus Kohlenstoff und Übergangsmetallen, wie Chrom oder Titan. In einer weiteren Alternative ist die äußerste Lage der Beschichtung eine Carbonitridschicht oder eine Abfolge von alternierenden Lagen aus Kohlenstoff und Übergangsmetallcarbiden. In einer weiteren Alternative ist die äußerste Lage der Beschichtung eine Abfolge von alternierenden Lagen aus Titannitrid oder Titan-Aluminiumnitrid uns Siliziumnitrid. In einer weiteren Alternative ist die äußerste Lage der Beschichtung eine Einzellage oder eine Mehrfachlage aus Titan-Siliziumnitrid.

### Aufgabe

Die Aufgabe der vorliegenden Erfindung bestand darin, Schneidwerkzeuge mit einem Grundkörper und einer mehrlagigen Beschichtung mit gegenüber dem Stand der Technik verbesserter Haftung auf dem Grundkörper und besseren Hochtemperatureigenschaften bei vergleichbaren oder besseren Härtewerten und verbesserter Verschleißbeständigkeit bereitzustellen.

### Beschreibung der Erfindung

Gelöst wird diese Aufgabe durch ein Schneidwerkzeug gemäß den anhängenden Patentansprüchen.

Die erste Nitridlage A besitzt gegenüber den aus dem Stand der Technik bekannten metallischen Hartstofflagen, wie z. B. TiC oder TiN, eine deutlich verbesserte Temperaturbeständigkeit und gleichzeitig eine hohe Härte, die mit der Härte von TiC vergleichbar, aber nicht so spröde wie diese ist. Die zweite Lage B aus Silizium-Nitrid (Si₃N₄) ist hart und verschleißbeständig und verhindert in Kombination mit der ersten Nitridlage A sehr gut den Wärmeübergang durch die Verschleißschutzbeschichtung in den Grundkörper und fördert damit eine verbesserte Wärmeableitung in die Späne bei der Metallbearbeitung mit dem Schneidwerkzeug. Die Verhinderung des Wärmeüberganges wird durch das Silizium-Nitrid ähnlich effektiv bewirkt wie durch Aluminiumoxid, das sehr häufig als harte Verschleißschutzschicht eingesetzt wird. Drüber hinaus besitzt die zweite Lage B aus Silizium-Nitrid (Si₃N₄) eine sehr hohe Oxidationsbeständigkeit auch bei hohen Temperaturen.

Gemäß der Erfindung ist die erste Lage A aus Hartstoff unmittelbar auf dem Grundkörper aufgebracht. Sie vermittelt eine besonders gute Haftung zwischen dem Siliziumnitrid und den Grundkörper, insbesondere wenn die erste Lage A aus TiAlN besteht.

In einer bevorzugten Ausführungsform der Erfindung ist über der zweiten Lage B wenigsten eine weitere periodisch wiederholte Abfolge von Lagen A und B aufgebracht, wobei die Lagen A in der periodisch wiederholten Abfolge von Lagen A und B ebenfalls unter Titan-Aluminiuim-Nitrid (TiAIN), Titan-Aluminium-Silizium-Nitrid (TiAlSiN), Chrom-Nitrid (CrN), Aluminiuim-Chrom-Nitrid (AlCrN), Aluminiuim-Chrom-Silizium-Nitrid (AlCrSiN) und Zirkonium-Nitrid (ZrN) ausgewählt sind, aber von dem Hartstoff der ersten Lage A verschieden sein können. Bevorzugt sind die Lagen A jeweils Titan-Aluminiuim-Nitrid (TiAlN) und die Lagen B jeweils Silizium-Nitrid (Si₃N₄).

Erfindungsgemäß ist das Silizium-Nitrid (Si₃N₄) der Hartstofflage B amorph. Amorphes Silizium-Nitrid besitzt überraschend gute Verschleißschutzeigenschaften und gute Temperaturbeständigkeit bei gleichzeitig hoher Härte.

Das Silizium-Nitrid (Si₃N₄) der Hartstofflage B kann jeweils bis zu 20 Atom-%, vorzugsweise bis zu 5 Atom-% üblicher oder unüblicher Verunreinigungen oder Dotierelemente enthalten. Diese üblichen oder unüblichen Verunreinigungen oder Dotierelemente sind vorzugsweise ausgewählt unter Sauerstoff, Kohlenstoff, Bor, Gallium und Arsen.

In einer ganz besonders bevorzugten Ausführungsform der Erfindung ist der Hartstoff der ersten Lage A Titan-Aluminiuim-Nitrid (TiAIN). TiAlN hat sich als besonders vorteilhaft in Kombination mit der zweiten Lage B aus Silizium-Nitrid (Si₃N₄) erwiesen. TiAlN besitzt ein kubisch flächenzentriertes Kristallgitter, wie auch TiAlSiN, welches in der TiAIN-Lage in einer Menge von bis zu 5 Gew.-% enthalten sein kann.

In einer weiteren Ausführungsform der Erfindung ist über den Lagen A und B oder dem sich periodisch wiederholenden Verbund aus Lagen A und B wenigstens eine weitere Hartstofflage oder metallische Lage aufgebracht, die unter Aluminiumoxid, Aluminium-Chrom-Oxid, Chromoxid, Zirkoniumnitrid, Titannitrid und Aluminiummetall ausgewählt ist, wobei alle vorgenannten Hartstoffe optional mit einem oder mehreren weiteren Elementen dotiert sein können.

In einer Variante der Erfindung ist über den Lagen A und B wenigstens eine weitere Hartstofflage aus Aluminiumoxid und darüber eine weitere Lage aus Zirkoniumnitrid, Titannitrid oder Aluminiummetall aufgebracht.

Die über den Lagen A und B aufbringbaren weiteren Lagen sind grundsätzlich bekannt. Aluminiumoxid ist beispielsweise eine sehr harte und beständige Verschleißschutzschicht, ähnlich auch Aluminium-Chrom-Oxid und Chromoxid. Demgegenüber werden Zirkoniumnitrid, Titannitrid und Aluminiummetall üblicherweise zur Farbgebung des Schneidwerkzeugs und als Indikatorschichten für die Benutzung des Schneidwerkzeugs als äußerste Lagen aufgebracht.

Die erfindungsgemäße mehrlagige Beschichtung weist zweckmäßig eine Gesamtschichtdicke im Bereich von 2 bis 10 µm auf, vorzugsweise von 3 bis 6 µm. Die erste Lage A, die unmittelbar auf dem Grundkörper aufgebracht ist, hat eine Schichtdicke im Bereich von 0,5 bis 4 µm, vorzugsweise von 1 bis 3 µm. Die Schichtdicken optional vorhandener weiterer Lagen A liegen demgegenüber zweckmäßigerweise im Bereich von 0,2 bis 2 µm, vorzugsweise von 0,3 bis 1 µm. Die Lagen B haben Schichtdicken im Bereich von 0,2 bis 5 µm, vorzugsweise von 0,3 bis 3 µm, besonders bevorzugt im Bereich von 0,5 bis 1 µm. Bei zu hohen Schichtdicken besteht generell die Gefahr des Abplatzens aufgrund zu hoher mechanischer Spannungen in der Schicht. Bei zu geringen Schichtdicken besteht die Gefahr, dass die jeweilige Einzellage die von Ihr gewünschte Funktion nicht oder nicht ausreichend erfüllt.

Bevorzugt sind die Lagen A und B in der erfindungsgemäßen Beschichtung mittels PVD-Verfahren auf den Grundkörper aufgebrachte Lagen, wobei die Lagen A besonders bevorzugt mittels Lichtbogenverdampfen (Arc-PVD) und die Lagen B besonders bevorzugt mittels Magnetronsputtern, insbesondere dualem Magnetronsputtern oder HIPIMS (High Power Impulse Magnetron Sputtering) aufgebracht sind.

Der Grundkörper des erfindungsgemäßen Schneidwerkzeus ist bevorzugt aus Hartmetall, Cermet, Stahl oder Schnellarbeitsstahl (HSS) hergestellt.

Die neuartige Beschichtung der vorliegenden Erfindung eröffnet ein breites Spektrum an Möglichkeiten zur Verbesserung und/oder Anpassung der Verschleißfestigkeit, der Standzeiten und der Schneideigenschaften von Schneidwerkzeugen. Die Verschleißbeständigkeit, Standfestigkeit und Schneideigenschaften einer Beschichtung auf einem Schneidwerkzeug hängt von verschiedenen Faktoren ab, wie beispielsweise dem Material des Grundkörpers des Schneidwerkzeugs, der Abfolge, Art und Zusammensetzung der in der Beschichtung vorhandenen Lagen, der Dicke der verschiedenen Lagen und nicht zuletzt der Art der mit dem Schneidwerkzeug durchgeführten Schneidoperation. Für ein und dasselbe Schneidwerkzeug können sich unterschiedliche Verschleißfestigkeiten in Abhängigkeit von der Art des zu bearbeitenden Werkstücks, dem jeweiligen Bearbeitungsverfahren und den weiteren Bedingungen während der Bearbeitung, wie beispielweise. Entwicklung hoher Temperaturen oder Verwendung korrosiver Kühlflüssigkeiten, ergeben. Darüber hinaus unterscheidet man zwischen verschiedenen Verschleißarten, die je nach Bearbeitungsvorgang die Nutzungsdauer eines Werkzeugs, d. h. seine Standzeit, stärker oder geringer beeinflussen können. Die Weiterentwicklung und Verbesserung von Schneidwerkzeugen ist daher stets im Hinblick darauf zu betrachten, welche Werkzeugeigenschaften verbessert werden sollen, und unter vergleichbaren Bedingungen gegenüber dem Stand der Technik zu beurteilen.

Wesentliche Verbesserungen der erfindungsgemäßen Schneidwerkzeuge mit einem Grundkörper und einer erfindungsgemäßen mehrlagigen Beschichtung sind gegenüber dem Stand der Technik verbesserte Haftung der Beschichtung auf dem Grundkörper, bessere Hochtemperatureigenschaften, bessere Härtewerte und verbesserte Verschleißbeständigkeit.

Ein weiterer überraschender Effekt, der bei den erfindungsgemäßen Beschichtungen beobachtet wurde, ist eine Reduzierung der Wärmeleitfähigkeit der Gesamtbeschichtung. Diese überraschend erreichte Reduzierung der Wärmeleitfähigkeit der Beschichtung wirkt sich sehr positiv im Einsatz solcher Schneidwerkzeuge bei der Zerspanung von Metallen und Verbundmaterialien aus. Die reduzierte Wärmeleitfähigkeit führt zu einer verbesserten Thermoschockbeständigkeit und damit zu erhöhter Kammrissfestigkeit des Materials des Grundkörpers, insbesondere Hartmetall.

Es versteht sich von selbst, daß sämtliche Einzelmerkmale, wie sie für bestimmte erfindungsgemäße Ausführungsformen hierin beschrieben sind, soweit dies technisch sinnvoll und möglich ist, mit allen übrigen beschriebenen Merkmalen erfindungsgemäßer Ausführungsformen kombinierbar sind und solche Kombinationen als im Rahmen dieser Beschreibung offenbart angesehen werden. Auf die einzelne Benennung sämtlicher möglicher Kombinationen wird hierin lediglich aus Gründen der besseren Lesbarkeit verzichtet.

Weitere Vorteile, Merkmale und Ausführungsformen der vorliegenden Erfindung werden anhand der nachfolgenden Beispiele erläutert.

### BEISPIELE

In einer PVD-Beschichtungsanlage (Flexicoat; Hauzer Techno Coating) wurden Hartmetallgrundkörper mit einer mehrlagigen PVD-Beschichtung versehen. Die Geometrie des Grundkörpers war SEHW120408 bzw. ADMT160608-F56 (nach DIN-ISO 1832). Vor der Abscheidung der Lagen wurde die Anlage auf 1x10⁻⁵ mbar evakuiert und die Hartmetalloberfläche durch Ätzen mit Argonionen mit 170 V Vorspannung gereinigt.

### Beispiel 1

| **Lage A:** | **TiAlN** |
|---|---|
| PVD-Verfahren: | Lichtbogenverdampfen (Arc-PVD) |
| Target: | Ti/Al (33/67 At.-%) Rundquelle (63 mm Durchmesser) |
| Abscheidung: | Temperatur: 500°C; Verdampferstrom: 65 Ampere; 3,2 Pa N₂-Druck, 50 Volt Substratvorspannung |
| | |

| **Lage B:** | **Si₃N₄** |
|---|---|
| PVD-Verfahren: | Duales Magnetronsputtern |
| Target: | Si-Rechteckquelle (80 cm x 20 cm) |
| Abscheidung: | Temperatur: 500°C; 6 W/cm²; 200 sccm N₂; 0,5 Pa Ar-Druck, 90 Volt Substratvorspannung |
| Struktur: | röntgenamorph |
| Bindungscharakter: | kovalent gemäß XPS |
| | |
| Lagenabfolge: | Grundkörper / 2,5 µm TiAlN / 0,6 µm Si₃N₄ |

### Vergleichsbeispiel 1

Abscheidung einer 3,3 µm dicken TiAIN-Lage mit ansonsten den Abscheidungsparametern gemäß Beispiel 1, jedoch ohne Abscheidung einer weiteren Siliziumnitrid-Lage B.

In einem Fräsversuch an einem Werkstück aus 42CrMo4-Stahl (Festigkeit: 950 MPa) wurden die Schneidwerkzeuge aus Beispiel 1 und Vergleichsbeispiel 1 verglichen. Es wurde im Gleichlauf ohne Kühlschmierstoff mit einer Schnittgeschwindigkeit v_{c} = 235 m/min und einem Zahnvorschub f_{z} = 0,2 mm gefräst. Der Verschleiß wurde auf der Freifläche als mittlere Verschleißmarkenbreite VB in mm (an der Hauptschneide) nach einem Fräsweg von 4800 mm gemessen.

Es wurden folgende Verschleißmarkenbreiten VB festgestellt:

| | Verschleißmarkenbreite VB |
|---|---|
| **Beispiel 1:** | 0,06 mm |
| **Vergleichsbeispiel 1:** | 0,10 mm |

### Beispiel 2

Die Lage A aus TiAlN und die Lage B aus Si3N4 wurden mit den gleichen PVD-Verfahren und mit den gleichen Parametern wie in Beispiel 1 abgeschieden.
- Lagenabfolge:: Grundkörper / 2,5 µm TiAlN / 0,6 µm Si₃N₄/ 0,3 µm TiAlN / 0,1µm Si₃N₄/ 0,3 µm TiAlN / 0,1µm Si₃N₄

### Vergleichsbeispiel 2

Wie Vergleichsbeispiel 1, jedoch unter Abscheidung einer 4,0 µm dicken TiAIN-Lage.

In einem wie für Beispiel 1 durchgeführten Fräsversuch, jedoch mit einer Schnittgeschwindigkeit v_{c} = 283 m/min und einem Zahnvorschub f_{z} = 0,3 mm wurden folgende Verschleißmarkenbreiten VB festgestellt:

| | Verschleißmarkenbreite VB |
|---|---|
| **Beispiel 2:** | 0,10 mm |
| **Vergleichsbeispiel 2:** | 0,30 mm |

## Patentansprüche

1. Schneidwerkzeug mit einem Grundkörper und einer darauf aufgebrachten mehrlagigen Beschichtung,
wobei unmittelbar auf dem Grundkörper eine erste Lage A aus einem Hartstoff aufgebracht ist, welcher unter Titan-Aluminiuim-Nitrid (TiAIN), Titan-Aluminium-Silizium-Nitrid (TiAlSiN), Chrom-Nitrid (CrN), Aluminiuim-Chrom-Nitrid (AlCrN), Aluminiuim-Chrom-Silizium-Nitrid (AlCrSiN) und Zirkonium-Nitrid (ZrN) ausgewählt ist, und
unmittelbar über der ersten Lage A eine zweite Lage B aus amorphem Silizium-Nitrid (Si₃N₄) aufgebracht ist,
wobei die unmittelbar auf dem Grundkörper aufgebrachte erste Lage A eine Schichtdicke im Bereich von 0,5 bis 4 µm aufweist und die zweite Lage B eine Schichtdicke im Bereich von 0,2 bis 5 µm aufweist.

2. Schneidwerkzeug nach einem der vorangegangenen Ansprüche, **dadurch gekennzeichnet, dass** über der zweiten Lage B wenigsten eine weitere periodisch wiederholte Abfolge von Lagen A und B aufgebracht ist,
wobei die Lagen A in der weiteren periodisch wiederholten Abfolge von Lagen A und B ebenfalls unter Titan-Aluminiuim-Nitrid (TiAlN), Titan-Aluminium-Silizium-Nitrid (TiAlSiN), Chrom-Nitrid (CrN), Aluminiuim-Chrom-Nitrid (AlCrN), Aluminiuim-Chrom-Silizium-Nitrid (AlCrSiN) und Zirkonium-Nitrid (ZrN) ausgewählt sind, aber von dem Hartstoff der ersten Lage A verschieden sein können, und Schichtdicken im Bereich von 0,2 bis 2 µm aufweisen und
wobei die Lagen B in der weiteren periodisch wiederholten Abfolge von Lagen A und B Schichtdicken im Bereich von 0,2 bis 5 µm aufweisen.

3. Schneidwerkzeug nach einem der vorangegangenen Ansprüche, **dadurch gekennzeichnet, dass** das Silizium-Nitrid (Si₃N₄) der Hartstofflage B jeweils bis zu 20 Atom-%, vorzugsweise bis zu 5 Atom-% üblicher oder unüblicher Verunreinigungen oder Dotierelemente enthält, vorzugsweise ausgewählt unter Sauerstoff, Kohlenstoff, Bor, Gallium und Arsen.

4. Schneidwerkzeug nach einem der vorangegangenen Ansprüche, **dadurch gekennzeichnet, dass** der Hartstoff der ersten Lage A Titan-Aluminiuim-Nitrid (TiAlN) ist.

5. Schneidwerkzeug nach einem der vorangegangenen Ansprüche, **dadurch gekennzeichnet, dass** über den Lagen A und B wenigstens eine weitere Hartstofflage oder metallische Lage aufgebracht ist, ausgewählt unter Aluminiumoxid, Aluminium-Chrom-Oxid, Chromoxid, Zirkoniumnitrid, Titannitrid und Aluminiummetall, wobei alle vorgenannten Hartstoffe optional mit einem oder mehreren weiteren Elementen dotiert sein können.

6. Schneidwerkzeug nach einem der vorangegangenen Ansprüche, **dadurch gekennzeichnet, dass** über den Lagen A und B wenigstens eine weitere Hartstofflage aus Aluminiumoxid und darüber eine weitere Lage aus Zirkoniumnitrid, Titannitrid oder Aluminiummetall aufgebracht ist.

7. Schneidwerkzeug nach einem der vorangegangenen Ansprüche, **dadurch gekennzeichnet, dass** die mehrlagige Beschichtung eine Gesamtschichtdicke im Bereich von 2 bis 10 µm, vorzugsweise von 3 bis 6 µm aufweist.

8. Schneidwerkzeug nach einem der vorangegangenen Ansprüche, **dadurch gekennzeichnet, dass** die unmittelbar auf dem Grundkörper aufgebrachte erste Lage A eine Schichtdicke im Bereich von 1 bis 3 µm hat und optional vorhandene weitere Lagen A Schichtdicken im Bereich von 0,3 bis 1 µm haben.

9. Schneidwerkzeug nach einem der vorangegangenen Ansprüche, **dadurch gekennzeichnet, dass** die Lagen B Schichtdicken im Bereich von 0,3 bis 3 µm, besonders bevorzugt im Bereich von 0,5 bis 1 µm haben.

10. Schneidwerkzeug nach einem der vorangegangenen Ansprüche, **dadurch gekennzeichnet, dass** die Lagen A und B mittels PVD-Verfahren auf den Grundkörper aufgebrachte Lagen sind, wobei die Lagen A vorzugsweise mittels Lichtbogenverdampfen (Arc-PVD) und/oder die Lagen B mittels Magnetronsputtern, vorzugsweise duales Magnetronsputtern oder HIPIMS aufgebracht sind.

11. Schneidwerkzeug nach einem der vorangegangenen Ansprüche, **dadurch gekennzeichnet, daß** der Grundkörper aus Hartmetall, Cermet, Stahl oder Schnellarbeitsstahl (HSS) hergestellt ist.

## Claims

1. A cutting tool comprising a main body and a multi-layer coating applied thereto,
wherein directly applied to the main body is a first layer A of a hard material selected from titanium aluminium nitride (TiAlN), titanium aluminium silicon nitride (TiAlSiN), chromium nitride (CrN), aluminium chromium nitride (AlCrN), aluminium chromium silicon nitride (AlCrSiN) and zirconium nitride (ZrN), and
a second layer B of amorphous silicon nitride (Si₃S₄) is applied directly over the first layer A,
wherein the first layer A applied directly to the main body has a layer thickness in the region of 0.5 to 4 µm and the second layer B has a layer thickness in the region of 0.2 to 5 µm.

2. A cutting tool according to one of the preceding claims **characterised in that** at least one further periodically repeated succession of layers A and B is applied over the second layer B,
wherein the layers A in the further periodically repeated succession of layers A and B are also selected from titanium aluminium nitride (TiAlN), titanium aluminium silicon nitride (TiAlSiN), chromium nitride (CrN), aluminium chromium nitride (AlCrN), aluminium chromium silicon nitride (AlCrSiN) and zirconium nitride (ZrN), but can be different from the hard material of the first layer A, and have layer thicknesses in the region of 0.2 to 2 µm, and
wherein the layers B in the further periodically repeated succession of layers A and B have layer thicknesses in the region of 0.2 to 5 µm.

3. A cutting tool according to one of the preceding claims **characterised in that** the silicon nitride (Si₃N₄) of the hard layer B respectively contains up to 20 atomic %, preferably up to 5 atomic %, of usual or unusual impurities or doping elements, preferably selected from oxygen, carbon, boron, gallium and arsenic.

4. A cutting tool according to one of the preceding claims **characterised in that** the hard material of the first layer A is titanium aluminium nitride (TiAlN).

5. A cutting tool according to one of the preceding claims **characterised in that** at least one further hard material layer or metallic layer is applied over the layers A and B, selected from aluminium oxide, aluminium chromium oxide, chromium oxide, zirconium nitride, titanium nitride and aluminium metal, wherein all aforementioned hard materials can optionally be doped with one or more further elements.

6. A cutting tool according to one of the preceding claims **characterised in that** at least one further hard material layer comprising aluminium oxide is applied over the layers A and B and applied thereover is a further layer of zirconium nitride, titanium nitride or aluminium metal.

7. A cutting tool according to one of the preceding claims **characterised in that** the multi-layer coating has an overall layer thickness in the region of 2 to 10 µm, preferably 3 to 6 µm.

8. A cutting tool according to one of the preceding claims **characterised in that** the first layer A applied directly to the main body has a layer thickness in the region of 1 to 3 µm and optionally present further layers A have layer thicknesses in the region of 0.3 to 1 µm.

9. A cutting tool according to one of the preceding claims **characterised in that** the layers B have layer thicknesses in the region of 0.3 to 3 µm, particularly preferably in the region of 0.5 to 1 µm.

10. A cutting tool according to one of the preceding claims **characterised in that** the layers A and B are layers applied to the main body by means of PVD processes, wherein the layers A are preferably applied by means of arc vapour deposition (arc PVD) and/or the layers B are applied by means of magnetron sputtering, preferably dual magnetron sputtering or HIPIMS.

11. A cutting tool according to one of the preceding claims **characterised in that** the main body is produced from hard metal, cermet, steel or high speed steel (HSS).

## Revendications

1. Outil de coupe comprenant un corps de base et un revêtement multicouche appliqué sur celui-ci,
une première couche A faite d'une matière dure choisie parmi le nitrure de titane et d'aluminium (TiAIN), le nitrure de titane, d'aluminium et de silicium (TiAISiN), le nitrure de chrome (CrN), le nitrure d'aluminium et de chrome (AICrN), le nitrure d'aluminium, de chrome et de silicium (AICrSiN) et le nitrure de zirconium (ZrN) étant appliquée directement sur le corps de base, et
une deuxième couche B faite de nitrure de silicium (Si₃N₄) amorphe étant appliquée directement sur la première couche A,
la première couche A appliquée directement sur le corps de base possédant une épaisseur de couche dans la plage de 0,5 à 4 µm et la deuxième couche B possédant une épaisseur de couche dans la plage de 0,2 à 5 µm.

2. Outil de coupe selon l'une quelconque des revendications précédentes, **caractérisé en ce qu'**au moins une autre succession de couches A et B répétées périodiquement est appliquée sur la deuxième couche B,
les couches A étant choisies dans l'autre succession de couches A et B répétées périodiquement également parmi le nitrure de titane et d'aluminium (TiAIN), le nitrure de titane, d'aluminium et de silicium (TiAISiN), le nitrure de chrome (CrN), le nitrure d'aluminium et de chrome (AICrN), le nitrure d'aluminium, de chrome et de silicium (AICrSiN) et le nitrure de zirconium (ZrN), mais pouvant être différentes de la matière dure de la première couche A, et possédant des épaisseurs de couche dans la plage de 0,2 à 2 µm et
les couches B dans l'autre succession de couches A et B répétées périodiquement possédant des épaisseurs de couches dans la plage de 0,2 à 5 µm.

3. Outil de coupe selon l'une quelconque des revendications précédentes, **caractérisé en ce que** le nitrure de silicium (Si₃N₄) de la couche de matière dure B contient dans chaque cas jusqu'à 20 %at, de préférence jusqu'à 5 %at d'impuretés habituelles ou inhabituelles ou d'éléments dopants, de préférence choisis parmi l'oxygène, le carbone, le bore, le gallium et l'arsenic.

4. Outil de coupe selon l'une quelconque des revendications précédentes, **caractérisé en ce que** la matière dure de la première couche A est du nitrure de titane et d'aluminium (TiAIN).

5. Outil de coupe selon l'une quelconque des revendications précédentes, **caractérisé en ce qu'**au moins une autre couche de matière dure ou une couche métallique est appliquée sur les couches A et B, choisie parmi l'oxyde d'aluminium, l'oxyde d'aluminium et de chrome, l'oxyde de chrome, le nitrure de zirconium, le nitrure de titane et l'aluminium métallique, toutes les matières dures précédemment citées pouvant éventuellement être dopées avec un ou plusieurs autres éléments.

6. Outil de coupe selon l'une quelconque des revendications précédentes, **caractérisé en ce qu'**au moins une autre couche de matière dure faite d'oxyde d'aluminium et par dessus une autre couche faite de nitrure de zirconium, de nitrure de titane ou d'aluminium métallique est appliquée sur les couches A et B.

7. Outil de coupe selon l'une quelconque des revendications précédentes, **caractérisé en ce que** le revêtement multicouche possède une épaisseur de couche totale dans la plage de 2 à 10 µm, de préférence de 3 à 6 µm.

8. Outil de coupe selon l'une quelconque des revendications précédentes, **caractérisé en ce que** la première couche A appliquée directement sur le corps de base possède une épaisseur de couche dans la plage de 1 à 3 µm et d'autres couches A éventuellement présentes possèdent des épaisseurs de couche dans la plage de 0,3 à 1 µm.

9. Outil de coupe selon l'une quelconque des revendications précédentes, **caractérisé en ce que** les couches B possèdent des épaisseurs de couche dans la plage de 0,3 à 3 µm, de manière particulièrement préférée dans la plage de 0,5 à 1 µm.

10. Outil de coupe selon l'une quelconque des revendications précédentes, **caractérisé en ce que** les couches A et B sont des couches appliquées sur le corps de base au moyen d'un procédé de dépôt en phase vapeur, les couches A étant appliquées de préférence au moyen d'une vaporisation par arc électrique (dépôt en phase vapeur par arc électrique) et/ou les couches B étant appliquées par pulvérisation par magnétron, de préférence par double pulvérisation par magnétron ou par pulvérisation cathodique magnétron en régime d'impulsions de haute puissance.

11. Outil de coupe selon l'une quelconque des revendications précédentes, **caractérisé en ce que** le corps de base est fabriqué à partir de métal dur, de cermet, d'acier ou d' acier rapide (HSS).
